# EUROPEAN PATENT SPECIFICATION

(11) **EP 1 533 163 B1**
(45) Date of publication and mention of the grant of the patent: **31.05.2006**
(21) Application number: 04027551.3
(22) Date of filing: 19.11.2004
(51) Int. Cl.: B60K 5/12

(54) **Supporting apparatus for a vehicular power unit**
Stützvorrichtung für Fahrzeugantriebsaggregat
Dispositif de support pour ensemble motopropulseur de véhicule

(30) Priority: 20.11.2003 JP 2003390974
(43) Date of publication of application: 25.05.2005
(73) Proprietor: HONDA MOTOR CO., Ltd., Tokyo (JP)
(72) Inventor: Katou, Yuuji, Wako-shi Saitama (JP); Miyagawa, Kazuo, Wako-shi Saitama (JP); Igami, Hajime, Wako-shi Saitama (JP)
(74) Representative: Herzog, Markus

(56) References cited:
- EP-A- 1 359 040
- DE-A1- 19 939 304
- GB-A- 2 343 665
- US-A1- 2002 005 311

## Description

### 1. Field of the Invention

The present invention relates to a supporting apparatus for a vehicular power unit in which substantially both end portions along a principal axis of inertia of a power unit constituted by coupling a power source and a speed reducer in series are supported by a vehicle body frame via a power source side mount and a speed reducer side mount shared with a static load of the power unit, and a portion of the power unit remote from the principal axis of inertia is connected to the vehicle body frame via a substantially horizontal torque rod.

### 2. Description of the Related Art

Such a supporting apparatus for a vehicular power unit has already been known in, for example, Japanese Patent Examined Publication No. JP-B-2562485.

Meanwhile, it is general that an upper end portion of a speed reducer constituting a power unit along with a power source is lower than an upper end position of the power source. In consideration of a width dimension of a vehicle body and mountability of the power unit to the vehicle body, a speed reducer side mount tend to be arranged at a position offset upward from a principal axis of inertia. In a case that an elastic constant in an vertical direction of the speed reducer side mount is set to be high in order to promote ride quality and ensure steering stability, also elastic constants in a longitudinal direction and in a left and right direction become high, and therefore, there is a possibility of amounting to a deterioration in a vibration transmitting characteristic in idling operation or the like.

### SUMMARY OF THE PRESENT INVENTION

The present invention has been carried out in view of such a situation and it is an object thereof to provide a supporting apparatus for a vehicular power unit achieving to promote ride quality and ensure steering stability while avoiding a deterioration in a vibration transmitting characteristic.

In order to achieve the above-described object, according to a first aspect of the present invention, there is provided a supporting apparatus for a vehicular a power unit (P) including a power source (E) and a speed reducer (T) which are connected in series, the supporting apparatus comprising;
a power source side mount (16) and a speed reducer side mount (17) sharing with a static load of the power unit (P), the power source side mount (16) and the speed reducer side mount (17) interposed between a vehicle body frame (F) and both end portions of the power unit (P) which are on a principal axis of inertia (C) of the power unit (P), respectively; and
torque rods (58, 67) connecting portions of the power unit (P) which are remote from the principal axis of inertia (C) to the vehicle body frame (F),
characterized in that a speed reducer side lower portion mount (71) is interposed between a lower portion of the speed reducer (T) and the vehicle body frame (F), and
the speed reducer side lower portion mount (71) has at least elastic constant in a vertical direction.

Here, the "substantially horizontal" torque rods indicate an arrangement capable of sharing torque reaction forces in a rolling direction thereof and in accelerating and decelerating a power unit to the torque rods.

Further, according to a second aspect of the present invention according to the first aspect of the present invention, it is preferable that the speed reducer side lower mount (71) includes a mount elastic body (74) in which elastic constants in a longitudinal direction and in a transverse direction are set to be lower than an elastic constant in the vertical direction.

According to a third aspect of the present invention according to the first aspect of the present invention, it is more preferable that the speed reducer side lower mount (71) is arranged to be opposed to the speed reducer side mount (17) by interposing the principal axis (C) of inertia therebetween.

According to a fourth aspect of the present invention according to the first aspect of the present invention, it is furthermore preferable that the speed reducer side lower mount (71) is interposed between a longitudinal member (62) of a sub frame (SF) attached to the vehicle body frame (F) and the lower portion of the speed reducer (T).

According to a fifth aspect of the present invention according to the second aspect of the present invention, it is suitable that the mount elastic body (74) is made of a rubber.

According to the first aspect of the present invention, the speed reducer side lower mount is provided between the lower portion of the speed reducer and the vehicle body frame. Therefore, even when the speed reducer side mount shared with the static load of the power unit is arranged at the position offset upward from the principal axis of inertia, ride quality can be promoted and steering stability can be ensured. Further, a center of elasticity of the speed reducer can be made to be proximate to the principal axis of inertia and therefore, a vibration transmitting characteristic can be promoted by improving a vibration mode.

Further, according to the second aspect of the present invention, ride quality and steering stability can further be promoted without increasing the elastic constant in the rolling direction of the power unit.

According to the third aspect of the present invention, the speed reducer side mount between an upper portion of the speed reducer and the vehicle body frame and the speed reducer side lower mount between the lower portion of the speed reducer and the vehicle body frame are arranged to be opposed to each other by interposing the principal axis of inertia therebetween. Therefore, the arrangement is advantageous in restricting rolling of the power unit.
Further, according to the fourth aspect of the present invention, the vertical member of the sub frame is provided with a low acoustic sensitivity, further, a transmitting path is also long. Therefore, the speed reducer side lower mount can be interposed between the lower portion of the speed reducer and the vehicle body frame by making noise on the side of the power unit difficult to be transmitted.

### BRIEF DESCRIPTION OF THE DRAWINGS

Fig. 1 is a plan view, partially cut away, of a power unit mounted on the vehicle.
Fig. 2 is a side view of the power unit as looked from the arrow 2 in Fig. 1.
Fig. 3 is a side view of the power unit as looked from the arrow 3 in Fig. 1.
Fig. 4 is a rear view of the power unit as looked from the arrow 4-4 in Fig. 1.
Fig. 5 is a longitudinal cross-sectional view of an engine side mount.
Fig. 6 is an enlarged cross-sectional view of the power unit taken along the line 6-6 in Fig. 1.
Fig. 7 is a longitudinal cross-sectional view of the power unit taken along the line 7-7 in Fig. 6.
Fig. 8 is a perspective view showing a state where a speed reducer side lower portion mount is removed from the lower portion of the speed reducer.
Fig. 9 is a longitudinal cross-sectional view of the power unit taken along the line 9-9 in Fig. 8.
Fig. 10 is a longitudinal cross-sectional view of the power unit taken along the line 10-10 in Fig. 9.
Fig. 11 is a perspective view of an on-board mount.
Fig. 12 is an enlarged cross-sectional view of the power unit taken along the line 12-12 in Fig. 11.
Fig. 13 is a side view showing part of an assembly line in which the power unit is assembled on the vehicle.

### DETAILED DESCRIPTION OF THE PREFERRED EMBODIMENTS

The preferred embodiments of the present invention will be described below by way of example with reference to the accompanying drawings.

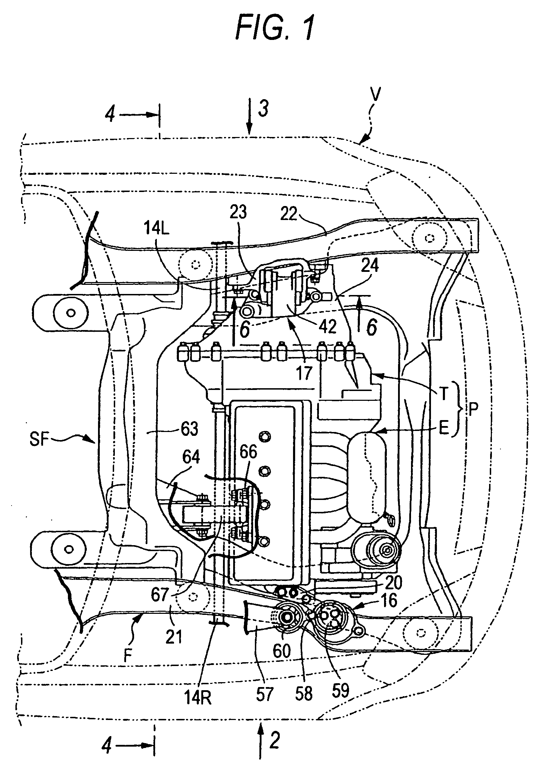

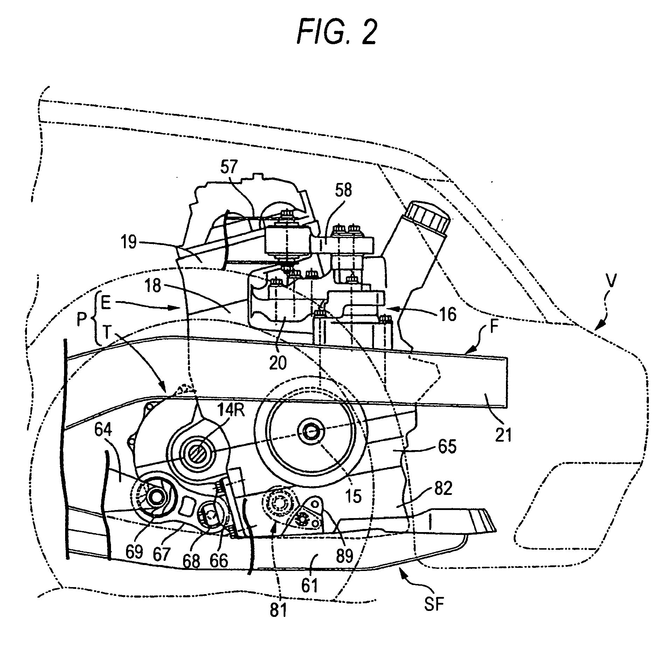

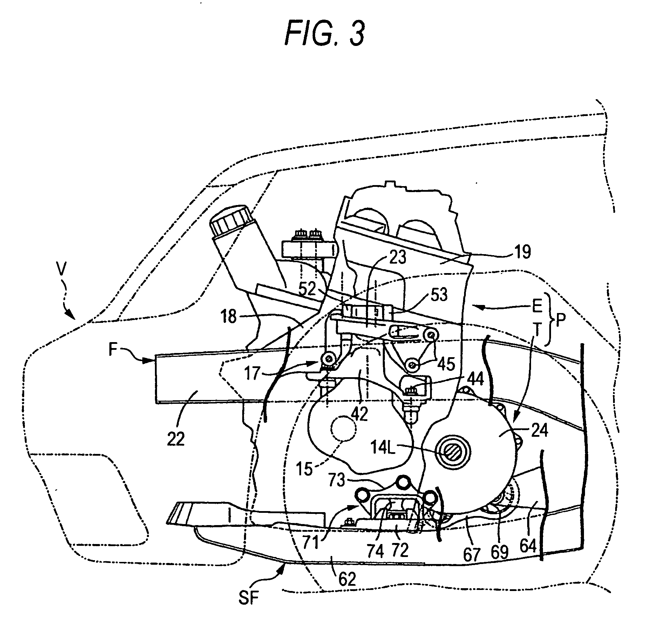

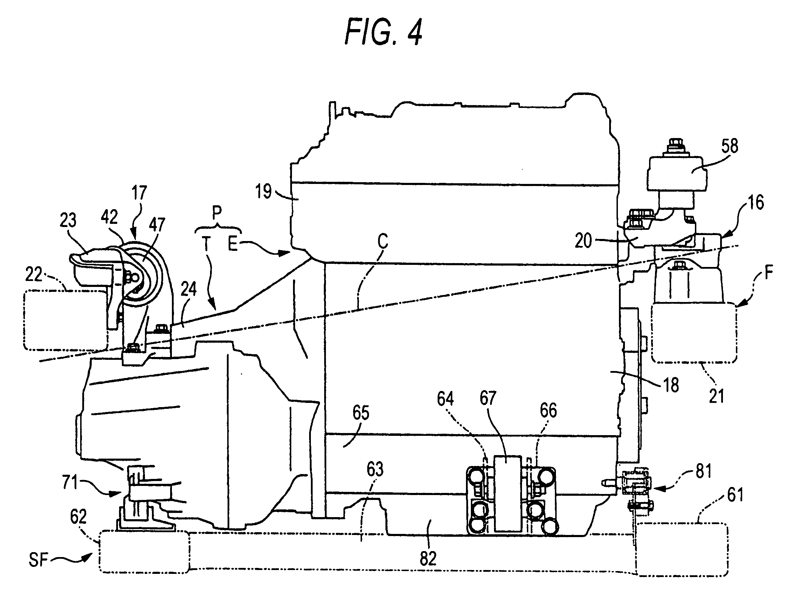

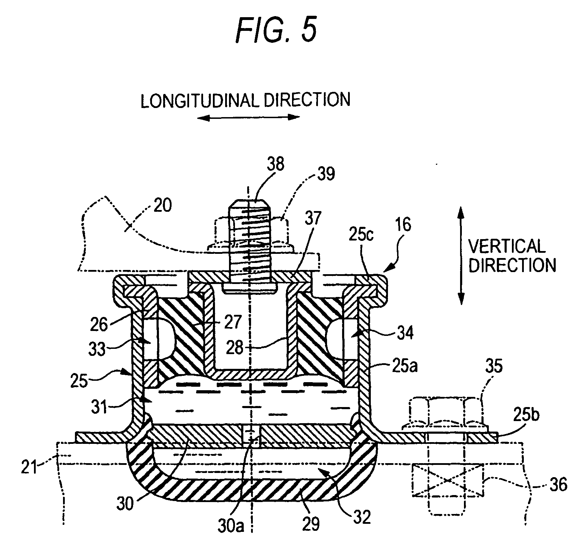

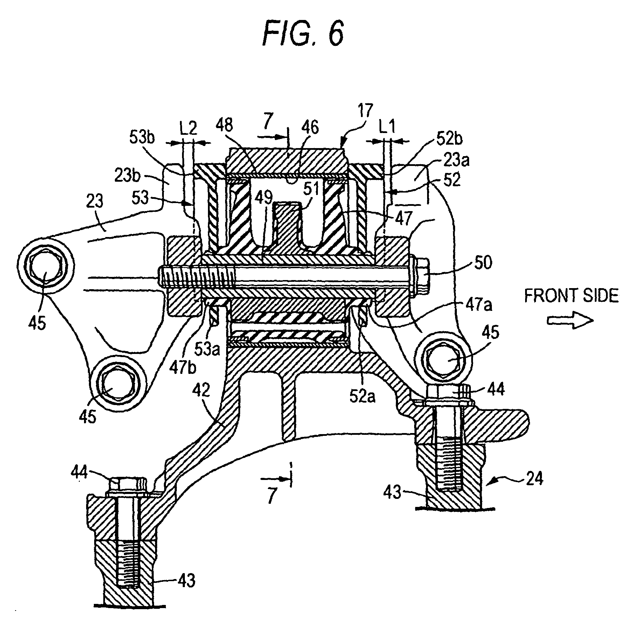

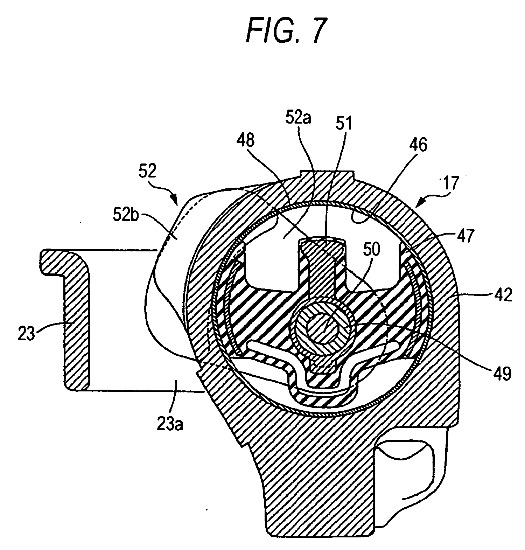

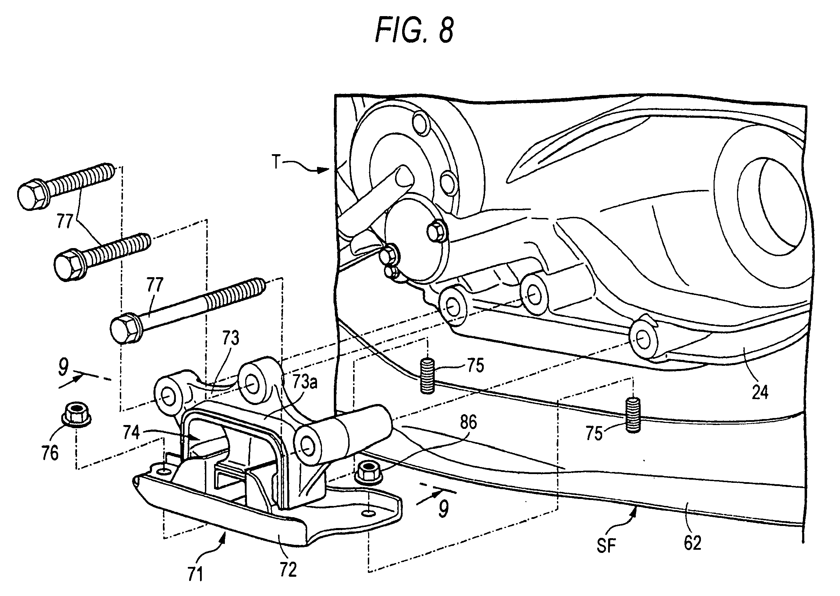

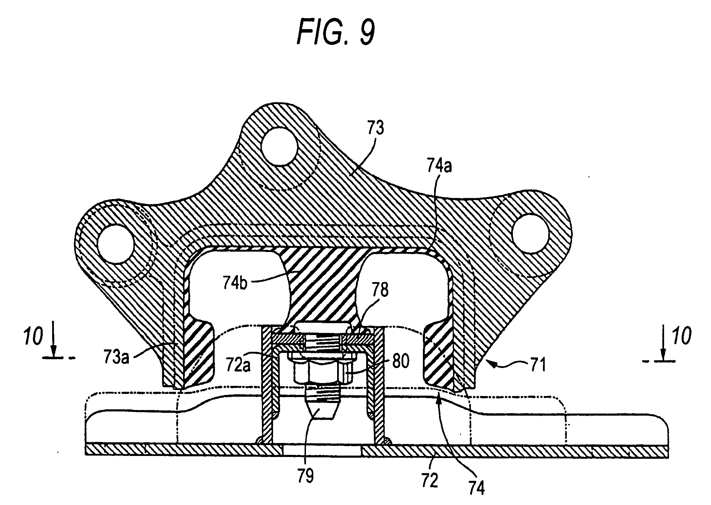

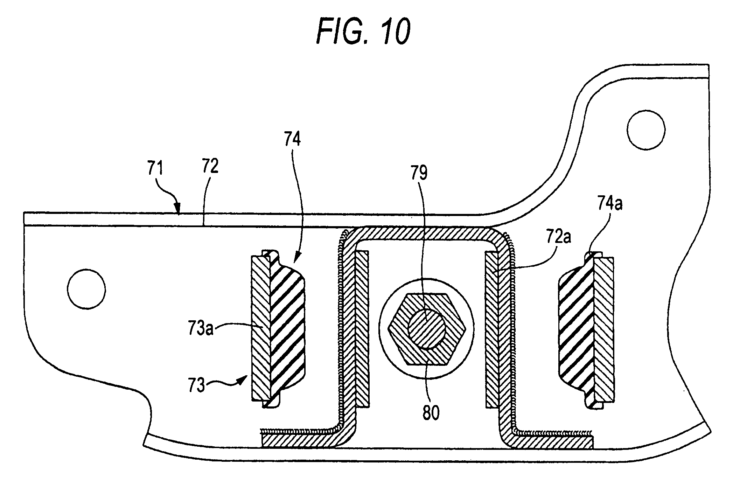

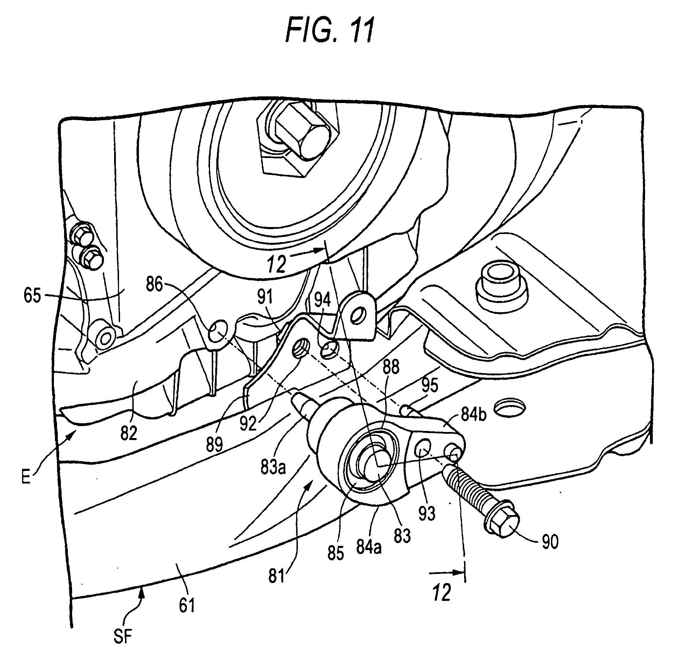

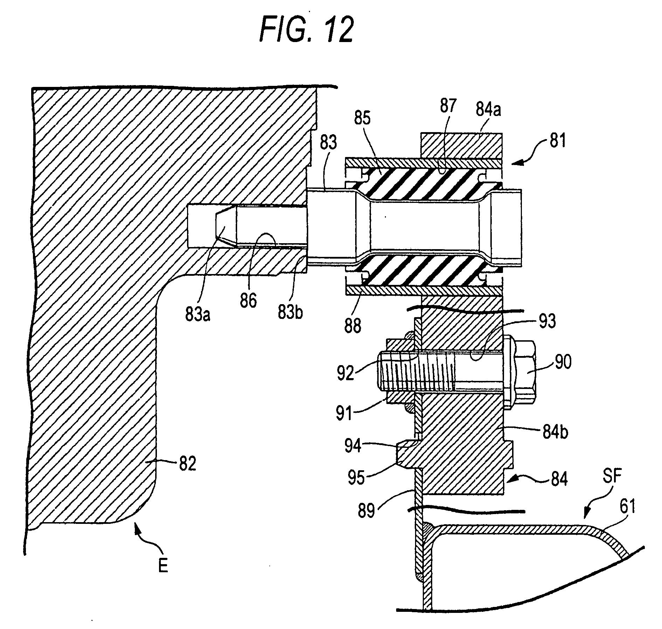

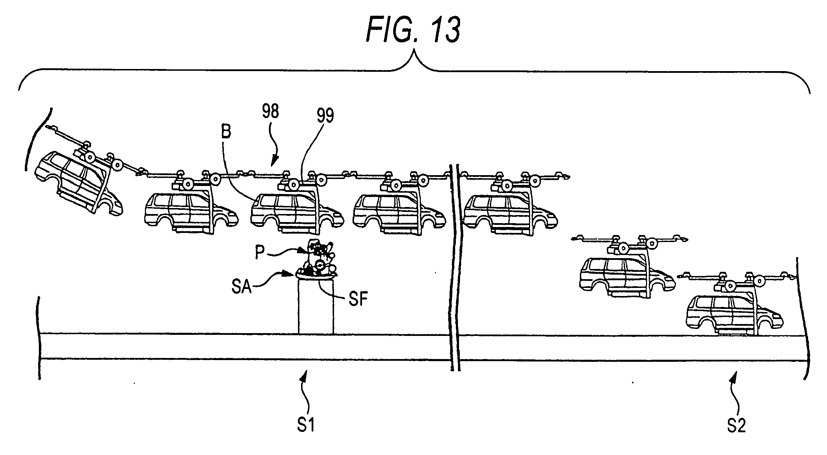

Figs. 1 to 13 show a power unit according to one embodiment of the invention. Fig. 1 is a plan view, partially cut away, of a power unit mounted on the vehicle. Fig. 2 is a side view of the power unit as looked from the arrow 2 in Fig. 1. Fig. 3 is a side view of the power unit as looked from the arrow 3 in Fig. 1. Fig. 4 is a rear view of the power unit as looked from the arrow 4-4 in Fig. 1. Fig. 5 is a longitudinal cross-sectional view of an engine side mount. Fig. 6 is an enlarged cross-sectional view of the power unit taken along the line 6-6 in Fig. 1. Fig. 7 is a longitudinal cross-sectional view of the power unit taken along the line 7-7 in Fig. 6. Fig. 8 is a perspective view showing a state where a speed reducer side lower portion mount is removed from the lower portion of the speed reducer. Fig. 9 is a longitudinal cross-sectional view of the power unit taken along the line 9-9 in Fig. 8. Fig. 10 is a longitudinal cross-sectional view of the power unit taken along the line 10-10 in Fig. 9. Fig. 11 is a perspective view of an on-board mount. Fig. 12 is an enlarged cross-sectional view of the power unit taken along the line 12-12 in Fig. 11. Fig. 13 is a side view showing part of an assembly line in which the power unit is assembled on the vehicle.

First of all, a power unit P mounted on the vehicle V of a front engine front drive (FF) is composed of an engine E as a power source and a speed reducer T that are connected in series, and disposed transversely with a crank shaft 15 extending along a cross direction of the vehicle V, as shown in Figs. 1 to 4. The speed reducer T disposed to the left of the engine E is constituted such that the position at its upper end portion is lower than the position of the upper end portion of the engine E. Thereby, the principal axis of inertia of the power unit P is lower toward the speed reducer T. Also, the drive shafts 14L, 14R located behind the principal axis of inertia C extend to the left and right from a differential gear contained in the speed reducer T.

This power unit P is supported on a vehicle body frame F via an engine side mount 16 as a power source side mount and a speed reducer side mount 17 sharing its static load. The engine side mount 16 and the speed reducer side mount 17 are disposed at roughly both end portions of the principal axis of inertia C of the power unit P.

A bracket 20 is attached on a cylinder block 18 and a cylinder head 19 for the engine E at one end along the axial line of the crank shaft 15, and an engine side mount 16 is interposed between a right front side frame 21 on the vehicle body frame F and the bracket 20. Also, the speed reducer side mount 17 is interposed between a left front side frame 22 on the vehicle body frame F and a mission case 24 of the speed reducer T.

In Fig.5, the engine side mount 16 is provided with a casing 25 including a casing main portion 25a in a cylindrical shape, and a flange portion 25b extend from a lower end of the casing main portion 25a outwardly in a radial direction, and a mount rubber 27 is interposed between the bracket 20 attached to the engine E and the casing 25. An outer periphery and an inner periphery of the mount rubber 27 is burned and fixed to an outer cylinder 26 substantially in a cylindrical shape and an inner cylinder 28 in a cup-like shape, and the outer cylinder 26 fitted to an inner side of the casing main portion 25a is fixed to the casing 25 by a calking portion 25c formed at an upper end of the casing main portion 25a. Further, a lower end of the casing main portion 25a is fixed with a cup-like elastic member 29 by burning, and an upper edge of the elastic member 29 is fixed with a partition wall 30 by burning.

A first liquid chamber 31 is formed between the partition wall 30 and the mount rubber 27. A second liquid chamber 32 is formed between the partition wall 30 and the elastic member 29. The first and second liquid chambers 31, 32 are in communication with each other via an orifice 30a provided in the partition wall 30.

Also, the third and fourth liquid chambers 33, 34 located in the longitudinal direction of the vehicle body are formed in an intermediate portion between the mount rubber 27 and the casing main portion 25a, and in communication with each other via an orifice, not shown.

Thus, the flange portion 25b of the casing 25 is fixed to the front side frame 21 of the vehicle body frame F by a plurality of bolts 35 and nuts 36. A support plate 37 fixed to the inner cylinder 28 is fixed to the bracket 20 attached on the engine E by the bolts 38 and nuts 39.

With this engine side mount 16, a static load of the power unit P is borne via the mount rubber 27 on the side frame 21 of the vehicle body frame F. Also, when the power unit P is operating, the volumes of the first and second liquid chambers 31, 32 are alternately increased and decreased to pass the liquid through the orifice 30a, thereby producing a damping force for suppressing a vertical vibration of the power unit P. Also, the volumes of the third and fourth liquid chambers 33, 34 are alternately increased and decreased to pass the liquid through the orifice, not shown, thereby producing a damping force for suppressing a longitudinal vibration of the power unit P. And the peak frequency for the vertical damping coefficient can be set by adjusting the size of the orifice 30a.

In Fig. 6 and Fig. 7, the speed reducer side mount 17 includes a holder 42 attached to an upper portion of the transmission case 24 of the speed reducer T, a bracket 23 integrally provided with support plate portions 23a, 23b to interpose the holder 42 in a longitudinal direction and attached to the vehicle body frame F, and a mount rubber 47 provided between the holder 42 and the bracket 23, the holder 42 is fastened to attaching bosses 43, 43 provided integrally with the upper portion of the transmission case 24 by bolts 44, 44 and the bracket 23 is attached to the front side frame 22 on the left side of the vehicle body frame F by bolts 45, 45.

The holder 42 is provided with a through hole 46 extending longitudinally, in which the mount rubber 47 received in the through hole 46 is interposed between the holder 42 and the bracket 23. The outer circumference and inner circumference of the mount rubber 47 are bonded to an outer cylinder 48 and an inner cylinder 49, in which the outer cylinder 48 is press fitted into the through hole 46 and thereby fixed to the holder 42.

Also, both ends of the inner cylinder 49 project longitudinally from the holder 42 to abut against both the support plate portions 23a, 23b of the bracket 23. The inner cylinder 49 is fixed to the bracket 23 by fastening a bolt 50 inserted into the front support plate portion 23a and the inner cylinder 49, and threadingly engaging the rear support plate portion 23b.

The mount rubber 47 absorbs the vibration of the speed reducer T, or the power unit P, owing to its compression, tension and elastic deformation in the shearing direction to act to dampingly suppress the vertical and transverse amplitude from excessively increasing, and is shaped to exhibit such an amplitude suppressing function, in which a stopper member 51 buried in the mount rubber 47 to function as a stopper in suppressing the amplitude is borne on the inner cylinder 49.

By the way, the speed reducer side mount 17 comprises a front elastic stopper 52 and a rear elastic stopper 53. The front elastic stopper 52 abuts against the support plate portion 23a of the bracket 23 when the holder 42 is displaced a first distance L1 to the fore side of the front side frame 22 in the vehicle body frame F. The rear elastic stopper 53 abuts against the support plate portion 23b of the bracket 23 when the holder 42 is displaced a second distance L2 to the rear side of the front side frame 22.

The front and rear elastic stoppers 52, 53 have integrally the thin plate portions 52a, 53a formed like the fan and the thick plate portions 52b, 53b overhanging longitudinally on both sides from the thin plate portions 52a, 53a and leading to the top end of the thin plate portions 52a, 53a. The base portion of the thin plate portions 52a, 53a corresponding to the essential part of fan is supported by the mount rubber 47. That is, the mount rubber 47 is provided integrally with a front cylinder portion 47a extending forwards along the outer circumference of the inner cylinder 49 and a rear cylinder portion 47b extending backwards along the outer circumference of the inner cylinder 49. The base portion of the thin plate portion 52a is engaged and supported by the front cylinder portion 47a penetrating through it, and the base portion of the thin plate portion 53a is engaged and supported by the rear cylinder portion 47b penetrating through it.

The front elastic stopper 52 supported by the front cylinder portion 47a is disposed between the support plate portion 23a in the bracket 23 and the holder 42. There is the first distance L1 apart between the front face of the thick plate portion 52b and the support plate portion 23a of the bracket 23 in an operation stop state of the power unit P, where a rear portion of the thick plate portion 52b provided in the front elastic stopper 52 is in contact with the holder 42. That is, when the holder 42 is displaced first distance L1 to the fore side of the front side frame 22 in the vehicle body frame F, the thick plate portion 52b of the front elastic stopper 52 abuts against the support plate portion 23a of the bracket 23.

Also, the rear elastic stopper 53 supported by the rear cylinder portion 47b is disposed between the support plate portion 23b in the bracket 23 and the holder 42. There is the second distance L2 longer than the first distance L1 apart between the rear face of the thick plate portion 52b and the support plate portion 23b of the bracket 23 in an operation stop state of the power unit P, where a front portion of the thick plate portion 52b provided in the rear elastic stopper 53 is in contact with the holder 42. That is, when the holder 42 is displaced second distance L2 to the rear side of the front side frame 22 in the vehicle body frame F, the thick plate portion 52b of the rear elastic stopper 53 abuts against the support plate portion 23b of the bracket 23.

And the friction coefficient of at least a portion of the front elastic stopper 52 and the rear elastic stopper 53 abutting against the support plate portions 23a, 23b in the bracket 23 is set to be lower on the side of the front elastic stopper 52. In this example, the front elastic stopper 52 is formed of an elastic material having a lower friction coefficient than the friction coefficient of the elastic material forming the rear elastic stopper 53.

Referring to Figs. 1 to 4 again, the vehicle body frame F comprises a bracket 57 disposed above the right front side frame 21. A torque rod 58 extending almost horizontally in the longitudinal direction is provided between this bracket 57 and the bracket 20 attached to the cylinder block 18 and cylinder head 19 of the engine E in the power unit P not to share the vertical static load of the power unit P. The torque rod 58 has the elastic members 59, 60 at both ends. A front end of the torque rod 58 is linked to the bracket 20 via the elastic member 59 to be rotatable around a vertical axis in respect to the crank shaft 15. A rear end of the torque rod 58 is linked to the bracket 57 via the elastic member 60 to be rotatable around the vertical axis.

By the way, a sub-frame SF is attached to the vehicle body frame F. This sub-frame SF comprises the right and left longitudinal members 61, 62 extending longitudinally below the right and left front side frames 21, 22 in the vehicle body frame F, and a cross member 63 linking both the longitudinal members 61, 62 behind the power unit P.

A torque rod 67 extending almost horizontally in the longitudinal direction is provided between a bracket 64 provided in the cross member 63 and a bracket 66 attached to a crank case 65 and an oil pan 82 of the engine E in the power unit P not to share the vertical static load of the power unit P. The torque rod 67 has the elastic members 68, 69 at both ends. A front end of the torque rod 67 is linked to the bracket 66 via the elastic member 68 to be rotatable around the axial line in parallel to the crank shaft 15. A rear end of the torque rod 67 is linked to the bracket 64 via the elastic member 69 to be rotatable around the axial line in parallel to the crank shaft 15.

Both the torque rods 58, 67 do not share the static load of the power unit P because they extend almost horizontally in the longitudinal direction. When the power unit P is operating, rolling fluctuation is elastically regulated by the elastic members 60, 69 provided for the torque rods 58, 67 on the side of the cross member 63 in the vehicle body frame F and the sub-frame SF attached to the vehicle body frame F.

Referring to Figs. 8 to 10, a speed reducer side lower portion mount 71 not sharing the static load of the power unit P is interposed to have at least a vertical spring component between the left longitudinal member 62 in the sub-frame SF attached to the vehicle body frame F and the lower portion of the mission case 24 in the speed reducer T. The speed reducer side lower portion mount 71 is disposed at a position opposed to the speed reducer side mount 17 across the principal axis of inertia C.

The reduction gear side lower mount 71 has a mount rubber 74 between a bracket 72 attached to the longitudinal member 62 and a holder 73 attached to a lower portion of the transmission case 24. The bracket 72 is attached to the longitudinal member 62 by, for example, two sets of the bolts 75, 75 and nuts 76, 76 constituting pairs, and the holder 73 is attached to the lower portion of the transmission case 24 by, for example, three bolts 77, 77 and 77.

The holder 73 is integrally provided with a rubber holding portion 73a substantially in a U-like shape opened downwardly. The mount rubber 74 is formed substantially in a T-like shape as a whole by including a thin plate portion 74a substantially in a U-like shape burned and bonded to an inner face of the rubber holding portion 73a and a support pillar portion 74b integrally continuous to a center portion of the thin plate portion 74a in a direction orthogonal thereto and extended in an vertical direction. A lower end of the support pillar portion 74b is burned and bonded to an attaching plate 78, and the attaching plate 78 is fixedly attached to the support plate portion 72 provided at the bracket 72 by a bolt 79 and a nut 80 so as that the mount rubber 74 fixes to the bracket 72.

This mount rubber 74 provided for the speed reducer side lower portion mount 71 has the spring constants set to be lower in the longitudinal and transverse direction than in the vertical direction, due to its shape.

By the way, when the power unit P is mounted on the vehicle body frame F, the sub-frame SF is connected to the suspended power unit P, the chassis parts such as suspension and steering are assembled into the sub-frame SF to constitute a sub-assembly, and the sub-frame SF of the sub-assembly is assembled into the vehicle body frame F from below. However, it is difficult to perform an operation of attaching the engine side and speed reducer side mounts 16, 17 to the vehicle body frame F from below the vehicle body frame F on the hanger, and to allow the operation from above the vehicle body frame F, it is desirable to perform the operation of attaching the engine side and speed reducer side mounts 16, 17 to the vehicle body frame F, when the vehicle body frame F having the sub-frame SF attached descends on a conveyer laid on the floor face.

However, even if the power unit P is connected to the cross member 63 of the sub-frame SF via the torque rod 67, the attitude of the power unit P is not decided in performing an operation of attaching the engine side and speed reducer side mounts 16, 17 on the vehicle body frame F. Therefore, it is difficult to perform the operation of attaching the engine side and speed reducer side mounts 16, 17 on the vehicle body frame F.

Thus, at a first step of assembling the sub-assembly, the power unit P and the sub-frame SF are connected via the torque rod 67, and at least two positions on the lower portion of the power unit P are supported via the on-board mount on the sub-frame SF. Therefore, the lower portion of the power unit P is supported via the speed reducer side lower portion mount 71 functioning as the on-board mount and the on-board mount 81 on the sub-frame SF, whereby the power unit P is assembled into the sub-frame SF in the almost same attitude as in the mounted state on the vehicle body frame F in this example.

In Fig.11 and Fig.12, the on-board mount 81 is provided on the right side of the power unit P and between the power unit P and the sub frame SF. The on-board mount 81 includes an snap-on pin 83 removably attached to the engine E of the power unit P, a holder 84 attachably and detachably fastened to the vertical member 61 on the right side provided to the sub frame SF, and a mount rubber 85 interposed between the snap-on pin 83 and the holder 84.

An oil pan 82 provided for the engine E has an insertion hole 86 with bottom that is opened to the longitudinal member 61 of the sub-frame SF. On the other hand, the holder 84 is provided with a through hole 87 corresponding to the insertion hole 82, in which an outer cylinder 88 to which the outer circumference of the mount rubber 85 is bonded is securely fitted into the through hole 87. Also, the inner circumference of the mount rubber 85 is bonded to the snap-on pin 83, and the snap-on pin 83 is supported via the mount rubber 85 on the holder 84. And the snap-on pin 83 is integrally provided with an annular step portion 83b that can abut against the oil pan 82 from the side and a small diameter pin portion 83a projecting from the step portion 83b to be removably inserted into the insertion hole 86.

The holder 84 is fastened to a mounting plate 89 fixed to the longitudinal member 61 of the sub-frame SF. That is, the holder 84 has integrally a holding portion 84a provided with the through hole 87, and a support plate portion 84b extending forwards from the holding portion 84a, in which the support plate portion 84b is fastened to the mounting plate 89 by a single bolt 90 and a nut 91.

The nut 91 is fixed on a face of the mounting plate 89 on the side of the power unit P, and the insert holes 92, 93 corresponding to the nut 91 are provided in the mounting plate 89 and the support plate portion 84b. The bolt 90 inserted into the insert holes 92, 93 is threadingly engaged and fastened into the nut 91, so that the holder 84 is mounted on the mounting plate 89.

Also, one of the support plate portion 84b and the mounting plate 89 for the holder 84, or the mounting plate 89 in this example, is provided with a regulation hole 94 at a position offset from the axial line of the bolt 90 and the nut 91. The other of the support plate portion 84b and the mounting plate 89 for the holder 84, or the support plate portion 84b in this example, is provided with a locking pin 95 for regulating the holder 84 from rotating around the axial line of the bolt 90, when inserted into the regulation hole 94. And the regulation hole 94 is formed with a long hole in a direction orthogonal to the locking direction with the regulation hole 94 and the locking pin 95, or a longitudinal direction in this example.

The rubber contents of the mount rubber 85 provide for the on-board mount 81 and the mount rubber 74 provided for the speed reducer side lower portion mount 71 also functioning as the on-board mount are set to be smaller than the rubber contents of the mount rubbers 27, 47 provided for the engine side mount 16 and the speed reducer side mount 17.

By the way, when the power unit P is mounted on the vehicle body frame F, at a first step of connecting the sub-frame SF to the power unit P and assembling the chassis parts such as suspension and steering to the sub-frame SF, the power unit P and the sub-frame SF are connected via the torque rod 67, and at least two positions on the lower portion of the power unit P, or two positions in this example, are supported via the speed reducer side lower portion mount 71 functioning as the on-board mount and the on-board mount 81 on the sub-frame SF, whereby the power unit P is assembled into the sub-frame SF in the almost same attitude as in the mounted state on the vehicle body frame F.

The sub-assembly SA produced at the first step is assembled into the vehicle body frame F provided for the vehicle body B from below the vehicle body B at a first station S1 on the course of conveying the vehicle body B supported by a hanger 99 on a conveyer 98, as shown in Fig. 13. That is, at the second step, the sub-frame SF mounted on the power unit P at the first step is attached in the vehicle body frame F of the vehicle body B.

Further, at the third step, the power unit P is supported via the engine side mount 16 and the speed reducer side mount 17 on the vehicle body frame F, in which the third step takes place in a second station S2 in which the vehicle body B descends on the floor face.

After the end of the third step, at least one of the speed reducer side mount 71 functioning as the on-board mount and the on-board mount 81, or the on-board mount 81 in this example, is removed from the sub-frame SF and the power unit P.

The action of this example will be described below. In mounting the power unit P on the vehicle body frame F, it is required to perform successively a first step of connecting the power unit P and the sub-frame SF via the torque rod 67, and supporting at least two positions on the lower portion of the power unit P (two positions in this example) via the speed reducer side lower portion mount 71 and the on-board mount 81 on the sub-frame SF to assemble the power unit P into the sub-frame SF in the almost same attitude as in the mounted state on the vehicle body frame F, a second step of attaching the sub-frame SF to the vehicle body frame F in a state where the power unit P is mounted at the first step, and a third step of supporting the power unit P via the engine side mount 16 and the speed reducer side mount 17 on the vehicle body frame F.

According to this mounting assembling procedure, the power unit P is defined in the almost same attitude as in the mounted state on the vehicle body frame F, owing to the torque rod 67 and at least two mounts of the speed reducer side lower portion mount 71 and the on-board mount 81 at the first step, and the attitude of the power unit P in the vehicle body frame F is made definite in a state where the sub-frame SF is mounted on the vehicle body frame F at the second step. Therefore, it is necessary to perform the third step of supporting the power unit P on the vehicle body frame F via the engine side mount 16 and the speed reducer side mount 17, when the vehicle body frame F on which the sub-frame SF is attached descends to the position at which the engine side mount 16 and the speed reducer side mount 17 can be attached on the vehicle body frame F from above, whereby the remodeling of assembly line and the process review are dispensed with, and the power unit P is mounted on the vehicle body frame F with a mount structure of torque rod type.

Also, at the first step, of the speed reduce side lower portion mount 71 and the on-board mount 81 provided between the power unit P and the sub-frame SF, the on-board mount 81 is removed from the sub-frame SF and the power unit P after the end of the third step, whereby it is possible to avoid unnecessary restriction of the power unit P to the vehicle body frame in the entire car, suppress an unnecessary increase in the vibration transmission path between the power unit P and the vehicle body frame F, and contribute to reduction of the weight of the entire car.

Also, because the speed reducer side lower portion mount 71 and the on-board mount 81 for use when assembling the sub-assembly SA provided between the sub-frame SF and the power unit P have the mount rubbers 74, 85, even if there is any error between the attitude of the power unit P defined by the speed reducer side lower portion mount 71, the on-board mount 81 and the torque rod 67, and the attitude of the power unit P in the mounted state on the vehicle body frame F, it is possible to absorb the error by the mount rubbers 74, 85 of the speed reducer side lower portion mount 71 and the on-board mount 81 and mount the power unit P on the vehicle body frame F easily and in correct attitude.

Since the rubber contents of the mount rubbers 74, 85 provided for the speed reducer side lower portion mount 71 and the on-board mount 81 are set to be smaller than the rubber contents of the mount rubbers 27, 47 provided for the engine side mount 16 and the speed reducer side mount 17, it is possible to avoid unnecessary increase in the rubber contents of the mount rubbers 74, 85 of the speed reducer side lower portion mount 71 and the on-board mount 81, and contribute to reduction of the cost.

By the way, the on-board mount comprises the snap-on pin 83 removably inserted into the power unit P, the holder 84 fastened detachably to the sub-frame SF, and the mount rubber 85 interposed between the snap-on pin 83 and the holder 84, whereby an operation of attaching and removing the on-board mount 81 that is removed at the third step is facilitated.

Moreover, since the holder 84 is fastened to the mounting plate 89 fixed to the sub-frame SF by a single bolt 90 and the nuts 91, the operation of attaching and removing the on-board mount 81 is further facilitated. And one of the holder 84a and the mounting plate 89 (mounting plate 89 in this example) is provided with the regulation hole 94 at the position offset from the axial line of the bolt 90 and nuts 91, and the other of the holder 84 and the mounting plate 89 (holder 84 in this example) is provided with the locking pin 95 for regulating the holder 84 from rotating around the axial line of the bolt 90 by being inserted into the regulation hole 94, whereby only by fastening with the single bolt 90 and nuts 91, the power unit P is blocked from being rotated around the axial line of the bolt 90 in mounting the engine side and speed reducer side mounts 16, 17 on the vehicle body frame F, making it easier to mount the engine side and speed reducer side mounts 16, 17 on the vehicle body frame F. In addition, since a long hole is formed in a direction orthogonal to the locking direction with the regulation hole 94 and the locking pin 95, any error between the attitude of the power unit P defined by the speed reducer side lower portion mount 71, the on-board mount 81 and the torque rod 67 and the attitude of the power unit P in the mounted state on the vehicle body frame F is absorbed by the mount rubber 74 of the on-board mount 81, but the power unit P is freely moved at least in a limited range along the longitudinal direction of the regulation hole 94 owing to a resilient force of the mount rubber 74 in fastening the bolt 90, so that the on-board mount 81 is easily removed.

The power unit P is mounted on the vehicle in a transverse state where the drive shafts 14L, 14R extending to the left and right from the speed reducer T are disposed behind the principal axis of inertia C, in which the engine side mount 16 disposed on the principal axis of inertia C at one end along the principal axis of inertia C between the power unit P and the vehicle body frame F, and the speed reducer side mount 17 disposed above the principal axis of inertia C at the other end along the principal axis of inertia C are interposed to share the static load of the power unit P with the mounts 16, 17, and a portion apart from the principal axis of inertia of the power unit P is connected to the vehicle body frame F via the torque rod 58 extending almost horizontally in the longitudinal direction not to share the static load in the vertical direction, and connected to the sub-frame F via the torque rod 67 extending almost horizontally in the longitudinal direction not to share the static load in the vertical direction, so that the sub-frame F is mounted on the vehicle body frame F. In this case, the speed reducer side mount 17 comprises a front elastic stopper 52 abutting against the support plate portion 23a of the bracket 23 attached on the vehicle body frame F when the holder 42 attached on the top of the mission case 24 in the speed reducer T is displaced a first distance L1 to the fore side of the vehicle body frame F, and a rear elastic stopper 53 abutting against the support plate portion 23b of the bracket 23 when the holder 42 is displaced a second distance L2 to the rear side of the vehicle body frame F.

Accordingly, when the forward displacement of the holder 42 or the power unit P from the vehicle body frame F is greater than or equal to the first distance L1, the front elastic stopper 52 abuts against the support plate portion 23a of the bracket 23. Also, when the backward displacement of the holder 42 or the power unit P from the vehicle body frame F is greater than or equal to the second distance L2, the rear elastic stopper 53 abuts against the support plate portion 23b of the bracket 23. Therefore, the longitudinal displacement of the power unit P is regulated by the speed reducer side mount 17.

And during acceleration, a reaction force on the backward inclined side acts on the power unit P so that the holder 42 of the speed reducer side mount 16 is displaced rearwards, while during deceleration, a reaction force on the forward inclined side acts on the power unit P so that the holder 42 is displaced forwards. Therefore, the displacement of the holder 42 caused by fluctuation of the power unit P during acceleration and deceleration is regulated resiliently, and the fluctuation of the power unit P during acceleration and deceleration is regulated while the torque rods 58, 67 fulfill the proper function. Also, since the second distance L2 is longer than the first distance L1, the chance of regulating the fluctuation of the power unit P is reduced during acceleration in which the crew is more likely to feel a shock than during deceleration, thereby preventing the crew of the vehicle from feeling a shock as much as possible.

Also, the friction coefficient of at least a portion of the front elastic stopper 52 and the rear elastic stopper 53 in contact with the support plate portions 23a, 23b in the bracket 23 is set to be lower on the side of the front elastic stopper 52. In this example, the front elastic stopper 52 is formed of an elastic material having a lower friction coefficient than the friction coefficient of the elastic material forming the rear elastic stopper 53, whereby at the time of regulating the fluctuation during deceleration in which there is more chance of regulating the power unit P, a forward force transmitted from the holder 42 via the front elastic stopper 52 to the support plate portion 23a of the bracket is dispersed vertically, because the abutment face having lower friction coefficient abuts against the support plate portion 23a, thereby reducing the input into the torque rods 58, 67 and relieving the feeling of shock during deceleration more effectively.

By the way, though the speed reducer side lower portion mount 71 functioning as the on-board mount in connecting the power unit P and the sub-frame SF is left behind between the power unit P and the sub-frame SF in a state of the entire car, this speed reducer side lower portion mount 71 is provided not to share the static load of the power unit P between the sub-frame SF and the lower portion of the speed reducer T in a mounted state on the vehicle body frame F to have at least the vertical spring component.

Accordingly, even if the speed reducer side mount 17 sharing the static load of the power unit P is disposed at a position offset above the principal axis of inertia C, make the car more conformable to drive, and securing the maneuvering stability. And since the elastic center of the speed reducer T can be made closer to the principal axis of inertia C, the vibration mode is changed to improve the vibration transmission characteristic.

Also, since the speed reducer side lower portion mount 71 has the mount rubber 74 having the longitudinal and transverse spring constants set to be lower than the vertical spring constants, it is possible to make the car more comfortable to drive and enhance the maneuvering stability without increasing the spring constant in the rolling direction of the power unit P.

And the speed reducer side lower portion mount 71 provided between the vehicle body frame F and the lower portion of the speed reducer T to interpose the sub-frame SF with the vehicle body frame F and the speed reducer side mount 17 between the upper portion of the speed reducer T and the vehicle body frame F are opposed across the principal axis of inertia C to be beneficial to regulate the rolling of the power unit P. Moreover, the speed reducer side lower portion mount 71 is interposed between the longitudinal member 62 of the sub-frame SF attached to the vehicle body frame F and the lower portion of the speed reducer T, and the longitudinal member 62 of the sub-frame SF has a low acoustic sensitivity and a long transmission path, whereby the speed reducer side lower portion mount 71 is interposed between the lower portion of the speed reducer T and the vehicle body frame F with the noise of the power unit P suppressed from transmission.

Though the invention have been described above by way of example, the invention is not limited to the above embodiments, but various modifications in design may be made thereto without departing from the scope of the invention.

A supporting apparatus for a vehicular power unit has a power unit (P) including a power source (E) and a speed reducer (T), a power source side mount (16) and a speed reducer side mount (17), the power source side mount (16) and speed reducer side mount (17) interposed between the vehicle body frame (F) and both end portions of the power unit (P) which are on a principal axis of inertia (C) of the power unit (P) and torque rods (58, 67) connecting portions of the power unit (P) which are remote from the principal axis of inertia (C) to the vehicle body frame (F). A speed reducer side lower portion mount (71) is interposed between the speed reducer (T) and the vehicle body frame (F), and the speed reducer side lower portion mount (71) has at least elastic constant in a vertical direction.

## Claims

1. A supporting apparatus for a vehicular power unit (P) including a power source (E) and a speed reducer (T) which are connected in series, the supporting apparatus comprising;
a power source side mount (16) and a speed reducer side mount (17) sharing with a static load of the power unit (P), the power source side mount (16) and the speed reducer side mount (17) interposable between a vehicle body frame (F) and both end portions of the power unit (P) which are on a principal axis of inertia (C) of the power unit (P), respectively; and
torque rods (58, 67) for connecting portions of the power unit (P) which are remote from the principal axis of inertia (C) to the vehicle body frame (F),
**characterized in that** a speed reducer side lower portion mount (71) is interposable between a lower portion of the speed reducer (T) and the vehicle body frame (F), and
the speed reducer side lower portion mount (71) has at least an elastic constant in a vertical direction.

2. A supporting apparatus for a vehicular power unit as set forth in Claim 1, **characterized in that** the speed reducer side lower mount (71) includes a mount elastic body (74) in which elastic constants in a longitudinal direction and in a transverse direction are set to be lower than an elastic constant in the vertical direction.

3. A supporting apparatus for a vehicular power unit according to Claim 1, **characterized in that** the speed reducer side lower mount (71) is arranged to be opposed to the speed reducer side mount (17) by interposing the principal axis (C) of inertia therebetween.

4. A supporting apparatus for a vehicular power unit according to Claim 1, **characterized in that** the speed reducer side lower mount (71) is interposed between a longitudinal member (62) of a sub frame (SF) attached to the vehicle body frame (F) and the lower portion of the speed reducer (T).

5. A supporting apparatus for a vehicular power unit according to Claim 2, **characterized in that** the mount elastic body (74) is made of a rubber.

## Patentansprüche

1. Stützvorrichtung für eine Fahrzeugantriebseinheit (P) umfassend eine Antriebsquelle (E) und einen Drehzahlreduzierer (T), die in Reihe verbunden sind, wobei die Stützvorrichtung umfasst: eine antriebsquellenseitige Halterung (16) und eine drehzahlreduziererseitige Halterung (17), die Anteil haben an der statischen Last der Antriebseinheit (P), wobei die antriebsquellenseitige Halterung (16) und die drehzahlreduziererseitige Halterung (17) anordenbar zwischen einem Fahrzeugkarosserierahmen (F) und den beiden Endabschnitten der Antriebseinheit (P) sind, welche jeweils auf der Hauptträgheitsachse (C) der Antriebseinheit (P) liegen, sowie Drehstangen (58, 67) zum Verbinden von Abschnitten der Antriebseinheit (P), welche von der Hauptträgheitsachse hin zu dem Fahrzeugkarosserierahmen (F) entfernt sind,
**dadurch gekennzeichnet, dass** eine drehzahlreduziererseitigeuntereabschnitts Halterung (71) zwischen einem unteren Abschnitt des Drehzahlreduzierers (T) und dem Fahrzeugkarosserierahmen (F) anordenbar ist, und dass die drehzahlreduziererseitigeuntereabschnitts Halterung (71) mindestens eine elastische Konstante in einer vertikalen Richtung aufweist.

2. Stützvorrichtung für eine Fahrzeugantriebseinheit nach Anspruch 1, **dadurch gekennzeichnet, dass** die drehzahlreduziererseitigeuntereabschnitts Halterung (71) einen Halterungselastizitätskörper (74) umfasst, bei welchem elastische Konstanten in einer Längsrichtung und in einer Querrichtung dazu eingestellt sind, kleiner zu sein als eine elastische Konstante in der vertikalen Richtung.

3. Stützvorrichtung für eine Fahrzeugantriebseinheit nach Anspruch 1, **dadurch gekennzeichnet, dass** die drehzahlreduziererseitigeuntereabschnitts Halterung (71) dazu vorgesehen ist, der drehzahlreduziererseitigen Halterung (17) gegenüberzustehen, indem die Hauptträgheitsachse (C) dazwischen angeordnet wird.

4. Stützvorrichtung für eine Fahrzeugantriebseinheit nach Anspruch 1, **dadurch gekennzeichnet, dass** die drehzahlreduziererseitigeuntereabschnitts Halterung (71) zwischen einem Längsteil (62) eines an den Fahrzeugkarosserierahmen (F) befestigten Unterrahmens (SF) und dem unteren Abschnitt des Drehzahlreduzierers (T) angeordnet wird.

5. Stützvorrichtung für eine Fahrzeugantriebseinheit nach Anspruch 2, **dadurch gekennzeichnet, dass** der Halterungselastizitätskörper (74) aus Gummi gemacht ist.

## Revendications

1. Dispositif de support pour unité de puissance de véhicule (P) comprenant une source de puissance (E) et un réducteur de vitesse (T) qui sont connectés en série, le dispositif de support comprenant :
une monture côté source de puissance (16) et une monture côté réducteur de vitesse (17) partageant une charge statique avec l'unité de puissance (P), la monture côté source de puissance (16) et la monture côté réducteur de vitesse (17) pouvant être interposées entre un cadre de caisse de véhicule (F) et les deux parties d'extrémité de l'unité de puissance (P) qui sont sur un axe principal d'inertie (C) de l'unité de puissance (P), respectivement ; et
des bielles de torsion (58, 67) pour relier des parties de l'unité de puissance (P) qui sont distantes de l'axe principal d'inertie (C) vers le cadre de caisse de véhicule (F),
**caractérisé en ce qu'**une monture de partie inférieure de côté réducteur de vitesse (71) peut être interposée entre une partie inférieure du réducteur de vitesse (T) et le cadre de caisse de véhicule (F), et
la monture de partie inférieure de côté réducteur de vitesse (71) a au moins une constante élastique dans une direction verticale.

2. Dispositif de support pour unité de puissance de véhicule selon la revendication 1, **caractérisé en ce que** la monture inférieure de côté réducteur de vitesse (71) comprend un corps élastique de monture (74) dans lequel les constantes élastiques dans une direction longitudinale et dans une direction transversale sont fixées pour être inférieures à une constante élastique dans la direction verticale.

3. Dispositif de support pour unité de puissance de véhicule selon la revendication 1, **caractérisé en ce que** la monture inférieure de côté réducteur de vitesse (71) est agencée pour être opposée à la monture côté réducteur de vitesse (17) en interposant l'axe principal (C) d'inertie entre elles.

4. Dispositif de support pour unité de puissance de véhicule selon la revendication 1, **caractérisé en ce que** la monture inférieure de côté réducteur de vitesse (71) est interposée entre un élément longitudinal (62) d'un cadre auxiliaire (SF) fixé au cadre de caisse de véhicule (F) et la partie inférieure du réducteur de vitesse (T).

5. Dispositif de support pour unité de puissance de véhicule selon la revendication 2, **caractérisé en ce que** le corps élastique de monture (74) est fait de caoutchouc.
